# EUROPÄISCHE PATENTSCHRIFT

(11) **EP 1 285 718 B1**
(45) Veröffentlichungstag und Bekanntmachung des Hinweises auf die Patenterteilung: **04.02.2004**
(21) Anmeldenummer: 01119997.3
(22) Anmeldetag: 18.08.2001
(51) Int. Cl.: B23K 26/06, B23K 26/10, B23K 37/02

(54) **Werkzeugmaschine zum Bearbeiten von Werkstücken mittels eines Laserstrahls**
Machine tool for machining workpieces by laser beam
Machine-outil pour l'usinage de pièces par faisceau laser

(43) Veröffentlichungstag der Anmeldung: 26.02.2003
(60) Teilanmeldung: 03011278.3
(73) Patentinhaber: TRUMPF Werkzeugmaschinen GmbH + Co. KG, 71254 Ditzingen (DE)
(72) Erfinder: Erlenmaier, Werner, 70839 Gerlingen (DE); Keel, Urs, 7310 Bad Ragaz (CH)
(74) Vertreter: KOHLER SCHMID + PARTNER

(56) Entgegenhaltungen:
- EP-A- 0 476 965
- DE-A- 4 411 263
- US-A- 4 342 535
- US-A- 5 560 843
- US-A- 5 774 981
- PATENT ABSTRACTS OF JAPAN vol. 1996, no. 06, 28. Juni 1996 (1996-06-28) & JP 08 052587 A (AMADA CO LTD), 27. Februar 1996 (1996-02-27)
- PATENT ABSTRACTS OF JAPAN vol. 2000, no. 01, 31. Januar 2000 (2000-01-31) & JP 11 285886 A (SHIN MEIWA IND CO LTD), 19. Oktober 1999 (1999-10-19)
- PATENT ABSTRACTS OF JAPAN vol. 015, no. 393 (M-1165), 4. Oktober 1991 (1991-10-04) & JP 03 161188 A (MATSUSHITA ELECTRIC IND CO LTD), 11. Juli 1991 (1991-07-11)
- PATENT ABSTRACTS OF JAPAN vol. 018, no. 054 (M-1549), 27. Januar 1994 (1994-01-27) & JP 05 277779 A (KITAGAWA IRON WORKS CO LTD), 26. Oktober 1993 (1993-10-26)
- PATENT ABSTRACTS OF JAPAN vol. 010, no. 047 (M-456), 25. Februar 1986 (1986-02-25) & JP 60 199586 A (MITSUBISHI ELECTRIC CORP), 9. Oktober 1985 (1985-10-09)

## Beschreibung

Die Erfindung betrifft eine Werkzeugmaschine zum Bearbeiten von Werkstücken mittels eines Laserstrahls, umfassend eine Laserstrahlquelle, einen Laserbearbeitungskopf, eine Strahlführung zur Führung des Laserstrahls von der Laserstrahlquelle zu dem Laserbearbeitungskopf sowie eine erste Führungsstruktur und eine zweite Führungsstruktur,
- wobei der Laserbearbeitungskopf bei der Werkstückbearbeitung relativ zu der Laserstrahlquelle bewegbar ist, indem die zweite Führungsstruktur mit dem Laserbearbeitungskopf an der ersten Führungsstruktur in Richtung einer ersten Bewegungsachse (x-Achse) bewegbar geführt ist und indem die zweite Führungsstruktur ihrerseits den Laserbearbeitungskopf in Richtung einer zweiten Bewegungsachse (y-Achse) bewegbar führt, die unter einem Winkel zu der ersten Bewegungsachse (x-Achse) verläuft,
- wobei die Strahlführung eine Strahlposaune mit einer Strahlumlenkung aufweist, wobei die Laserstrahlquelle gegenüber der Strahlumlenkung der Strahlposaune erhöht angeordnet ist, wobei die Strahlumlenkung bei der Bewegung des Laserbearbeitungskopfes relativ zu der Laserstrahlquelle auf diese Bewegung abgestimmt bewegbar an der ersten Führungsstruktur in Richtung der ersten Bewegungsachse (x-Achse) geführt ist und wobei die Strahlführung außerdem wenigstens ein Strahlführungselement aufweist, das in dem Weg des Laserstrahls zwischen der Laserstrahlquelle und der Strahlumlenkung der Strahlposaune vorgesehen und mittels dessen der von der Laserstrahlquelle ausgesandte Laserstrahl zu der Strahlumlenkung der Strahlposaune umlenkbar ist und
- wobei die zweite Führungsstruktur in Richtung der ersten Bewegungsachse (x-Achse) zu der Laserstrahlquelle hin in eine Bewegungs-Endstellung bewegbar ist und die Strahlumlenkung der Strahlposaune bei in der genannten Bewegungs-Endstellung befindlicher zweiter Führungsstruktur unter die Laserstrahlquelle bewegt ist.

Eine derartige Werkzeugmaschine ist aus JP 08 052587 A, bekannt. Im Falle des Standes der Technik sind als erste Führungsstruktur ein Maschinenbett und als zweite Führungsstruktur ein Ausleger vorgesehen, der von dem Maschinenbett in dessen Querrichtung vorragt. Der Ausleger ist längs des Maschinenbetts verfahrbar und führt seinerseits einen Laserbearbeitungskopf quer zu dem Maschinenbett. Eine Strahlführung der vorbekannten Maschine führt einen Laserstrahl von einem Lasergenerator zu dem Laserbearbeitungskopf. Die Strahlführung umfasst u.a. eine Strahlposaune, mittels derer die Laserstrahllänge zwischen dem Lasergenerator und dem Laserbearbeitungskopf ungeachtet derjenigen Bewegungen konstant gehalten wird, welche bei der Werkstückbearbeitung von dem Laserbearbeitungskopf längs des Auslegers und/oder von dem Ausleger längs des Maschinenbetts ausgeführt werden. Eine Strahlumlenkung der Strahlposaune verfährt dabei ebenfalls in Längsrichtung des Maschinenbetts. Bei entsprechender Verfahrbewegung des Laserbearbeitungskopfes hat die Strahlumlenkung der Strahlposaune den an dem Maschinenbett ansetzenden Teil des Auslegers zu unterfahren. Gleichzeitig ist der Lasergenerator gegenüber dem Maschinenbett so weit angehoben, dass er von dem Ausleger unterfahren werden kann. Entsprechend groß ist die Gesamtbauhöhe der vorbekannten Maschine.

Aus EP 0 559 916 A1 sowie aus JP 60 199586 A sind Maschinen bekannt, im Falle derer der Laserbearbeitungskopf an einer einen Werkstücktisch übergreifenden Brücke angebracht und dort in Brückenlängsrichtung verfahrbar ist. Die Brücke ihrerseits kann quer zu ihrer Längsrichtung bewegt werden. Die sich so ergebenden Bewegungsachsen des Laserbearbeitungskopfes definieren eine horizontale Ebene, innerhalb derer der Arbeitsbereich des Laserbearbeitungskopfes liegt. Strahlposaunen sorgen an beiden Maschinen dafür, dass die Laserstrahllänge, also die Länge des Ausbreitungsweges des Laserstrahls von der Laserstrahlquelle bis zu dem Laserbearbeitungskopf, ungeachtet der Relativbewegung von Laserbearbeitungskopf und Laserstrahlquelle konstant bleibt. Infolgedessen ergeben sich über den gesamten Arbeitsbereich des jeweiligen Laserbearbeitungskopfes einheitliche Bearbeitungseigenschaften des Laserstrahls. Als Strahlumlenkungen umfassen die vorbekannten Strahlposaunen Anordnungen mit jeweils zwei Umlenkspiegeln, mittels derer der Laserstrahl im Bereich der Strahlposaune auf einem im Wesentlichen U-förmigen Weg geführt wird.

Die Strahlumlenkung der Maschine nach EP 0 559 916 A1 ist dem Arbeitsbereich des Laserbearbeitungskopfes in Querrichtung der den Laserbearbeitungskopf führenden Brücke benachbart angeordnet und in Brückenlängsrichtung verfahrbar. Die Laserstrahlquelle ist in Brückenlängsrichtung gegen den Arbeitsbereich des Laserbearbeitungskopfes versetzt.

Im Falle der Maschine gemäß JP 60 199586 A sind zwei Strahlposaunen mit jeweils einer eigenen Strahlumlenkung vorgesehen. Die eine dieser Strahlumlenkungen ist gemeinsam mit dem Laserbearbeitungskopf an der Brücke der Maschine in Brückenlängsrichtung geführt. Die zweite Strahlumlenkung ist mit der Brücke in deren Querrichtung verfahrbar. In Bewegungsrichtung gesehen ist diese Strahlumlenkung dabei auf der einen, die Laserstrahlquelle auf der anderen Seite der Brücke angeordnet. Nimmt die Brücke ihre zu der Laserstrahlquelle hin gelegene Bewegungs-Endstellung ein, so liegen die mit der Brücke in deren Querrichtung verfahrbare Strahlumlenkung, die Brücke selbst sowie die Laserstrahlquelle in Bewegungsrichtung von Strahlumlenkung und Brücke gesehen hintereinander.

Die Maschinen gemäß EP 0 559 916 A1 und JP 60 199586 A besitzen aufgrund der vorstehend beschriebenen Gestaltung eine verhältnismäßig große Grundfläche.

Eine kompakt bauende Maschine zu schaffen, hat sich die vorliegende Erfindung ausgehend von dem gattungsgemäßen Stand der Technik zum Ziel gesetzt.

Erfindungsgemäß gelöst wird diese Aufgabe durch die Merkmalskombination gemäß Patentanspruch 1. Infolge der anspruchsgemäßen Übereinanderanordnung von Laserstrahlquelle und Strahlumlenkung der Strahlposaune sowie infolge der daraus resultierenden Möglichkeit, die Laserstrahlquelle mit der Strahlumlenkung zu unterfahren, ergibt sich eine verhältnismäßig kleine Grundfläche der Gesamtmaschine. Die zweite Führungsstruktur der Maschine trägt den Laserbearbeitungskopf und ist ebenso wie die Strahlumlenkung der Strahlposaune an der ersten Führungsstruktur bewegbar geführt. Die Strahlposaune dient gleichzeitig zur Kompensation von Bewegungen des Laserbearbeitungskopfes entlang der zweiten Führungsstruktur und zur Kompensation von Bewegungen des Laserbearbeitungskopfes infolge von Bewegungen der zweiten an der ersten Führungsstruktur. Bei in der anspruchsgemäßen Bewegungs-Endstellung befindlicher zweiter Führungsstruktur liegen allenfalls noch diese und die Laserstrahlquelle in Richtung der gemeinsamen Bewegungsachse von zweiter Führungsstruktur und Strahlumlenkung der Strahlposaune hintereinander. In Richtung dieser Bewegungsachse gesehen nehmen die Laserstrahlquelle, die Strahlumlenkung der Strahlposaune sowie die zweite Führungsstruktur folglich nur einen verhältnismäßig kleinen Raum ein.

Besondere Ausführungsarten der Werkzeugmaschine nach Patentanspruch 1 ergeben sich aus den angegebenen abhängigen Patentansprüchen.

Im Interesse einer kompakten Maschinenbauweise sind auch die kennzeichnenden Merkmale von Patentanspruch 2 vorgesehen. Die Länge der ersten Führungsstruktur ist im Falle derartiger Maschinen minimiert.

Ebenfalls eine kompakte Maschinenbauart bedingen die kennzeichnenden Merkmale von Patentanspruch 3, wonach ein und dieselbe Antriebsstange sowohl zum Antrieb der Strahlumlenkung der Strahlposaune als auch zum Antrieb des Laserbearbeitungskopfes genutzt wird.

Patentanspruch 4 beschreibt eine funktionssichere und fertigungs- sowie montagetechnisch einfach umzusetzende Möglichkeit zur gemeinsamen Nutzung einer Antriebsstange durch die Antriebe der Strahlumlenkung der Strahlposaune und der zweiten Führungsstruktur.

Gemäß Patentanspruch 5 ist zur Erzielung eines kompakten Gesamtaufbaus neben wenigstens einer gemeinsamen Antriebsstange auch wenigstens eine gemeinsame Führungsschiene für die Strahlumlenkung der Strahlposaune und die zweite Führungsstruktur vorgesehen.

Nachstehend wird die Erfindung anhand schematischer Darstellungen zu einem Ausführungsbeispiel näher erläutert. Es zeigen:
- Fig. 1: eine Laserbearbeitungsmaschine einschließlich Laserstrahlquelle, Strahlposaune mit Strahlumlenkung und Brücke mit Laserbearbeitungskopf in stark schematisierter Darstellung,
- Fig. 2: die Laserbearbeitungsmaschine nach Fig. 1 (weniger stark schematisiert) in der Ansicht in Richtung des Pfeils II in Fig. 1,
- Fig. 3: Antriebs- und Führungseinrichtungen für die Strahlumlenkung der Strahlposäune und für die Brücke nach den Fign. 1 und 2,
- Fig. 4: die für die Strahlumlenkung der Strahlposaune vorgesehenen Antriebs- und Führungseinrichtungen nach Fig. 3 in vergrößerter Darstellung und
- Fig. 5: die für die Brücke vorgesehenen Antriebs- und Führungseinrichtungen nach Fig. 3 in vergrößerter Darstellung.

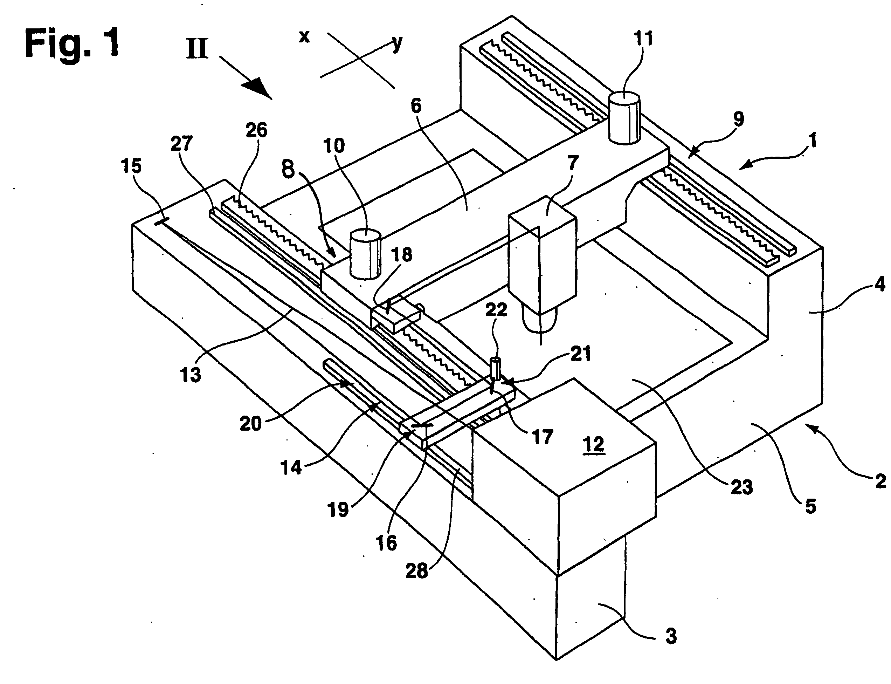

Gemäß Fig. 1 besitzt eine Laserbearbeitungsmaschine, vorliegend eine Laserschneidmaschine 1, einen Maschinenrahmen 2, an welchem Maschinenlängsträger 3, 4 und zwischen diesen eine Werkstückauflage 5 ausgebildet sind. Auf den Maschinenlängsträgern 3, 4 ist eine Brücke 6 in Richtung einer ersten Bewegungsachse (x-Achse) bewegbar. Die Brücke 6 ihrerseits lagert und führt einen Laserbearbeitungskopf in Form eines Laserschneidkopfes 7 in Richtung einer zweiten Bewegungsachse (y-Achse). Dementsprechend bilden die Maschinenlängsträger 3, 4 eine erste Führungsstruktur, die Brücke 6 eine zweite Führungsstruktur.

Nachstehend noch im Einzelnen beschriebene Antriebe 8, 9 mit elektrischen Antriebsmotoren 10, 11 bewirken die Bewegung der Brücke 6 mit dem daran gehaltenen Laserschneidkopf 7 in Richtung der x-Achse; ein der Einfachheit halber nicht gezeigter elektrischer Antrieb herkömmlicher Bauart sorgt für den Antrieb des Laserschneidkopfes 7 in Richtung der y-Achse.

Eine Laserstrahlquelle in Form eines CO₂-Lasers 12 ruht auf einem der beiden Enden des Maschinenlängsträgers 3. Der CO₂-Laser 12 dient zur Erzeugung eines Laserstrahls 13, der mittels einer Strahlführung 14 ausgehend von dem CO₂-Laser 12 zu dem Laserschneidkopf 7 gelenkt wird. Zu diesem Zweck umfasst die Strahlführung 14 u.a. Umlenkspiegel 15, 16, 17, 18, wobei die Umlenkspiegel 16, 17 Bestandteile einer Strahlumlenkung 19 einer Strahlposaune 20 sind.

Die Strahlumlenkung 19 der Strahlposaune 20 ist an dem Maschinenlängsträger 3 in Richtung der x-Achse geführt und wird mittels eines Antriebes 21 über einen Antriebsmotor 22 bewegt.

Auch der Antrieb 21 der Strahlumlenkung 19 wird nachstehend noch im Einzelnen erläutert.

In gewohnter Weise dient die Strahlposaune 20 dazu, die Länge des Laserstrahls 13, d.h. die Länge des Ausbreitungsweges des Laserstrahls 13 von dem CO₂-Laser 12 bis zu dem Laserschneidkopf 7, im Einzelnen der dort vorgesehenen Fokussierlinse, konstant zu halten. Zu diesem Zweck wird die Strahlumlenkung 19 abgestimmt auf diejenige Bewegung verfahren, welche der Laserschneidkopf 7 bei der Werkstückbearbeitung, beispielsweise beim Schneiden eines auf der Werkstückauflage 5 ruhenden Blechs 23, ausführt. Bewegt sich der Laserschneidkopf 7 etwa in Fig. 1 um einen bestimmten Betrag in Richtung der y-Achse zu dem Maschihenlängsträger 4 hin, so verfährt die Strahlumlenkung 19 zeitgleich an dem Maschinenlängsträger 3. entlang in Richtung auf die Brücke 6. Nachdem der Laserstrahl 13 mittels der Strahlumlenkung 19 U-förmig "gefaltet" wird, hat die Verfahrweglänge der Strahlumlenkung 19 zur Kompensation der von dem Laser-schneidkopf 7 ausgeführten Bewegung lediglich die Hälfte der Länge des Verfahrweges des Laserschneidkopfes 7 zu betragen. Entsprechend werden durch Verfahren der Strahlumlenkung 19 in Richtung der x-Achse auch Bewegungen des Laserschneidkopfes 7 kompensiert, die von Letzerem durch Verfahren der Brücke 6 in Richtung der x-Achse ausgeführt werden. Durch die Kompensation der Bewegungen des Laserschneidkopfes 7 mittels der Strahlposaune 20 und der damit verbundenen Konstanz der Länge des Laserstrahls 13 wird erreicht, dass dieser. über den gesamten Arbeitsbereich des Laserschneidkopfes 7 einheitliche Bearbeitungseigenschaften besitzt.

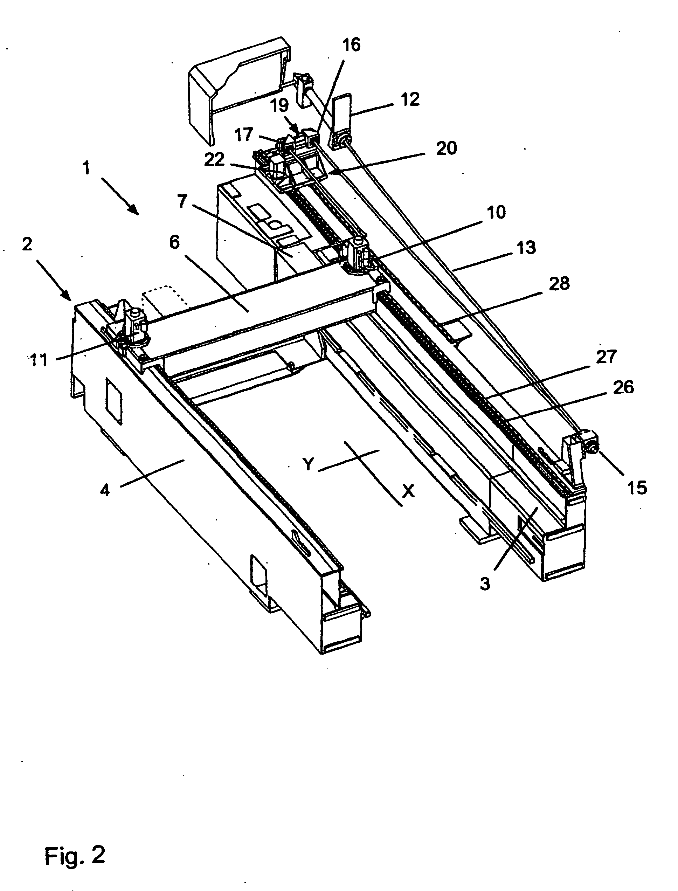

Wie insbesondere aus Fig. 2 hervorgeht, ist der CO₂-Laser 2 gegenüber der Strahlumlenkung 19 der Strahlposaune 20 erhöht angeordnet. Demzufolge kann die Strahlumlenkung 19 den CO₂-Laser 12 bei ihrer Bewegung zur Kompensation der Verfahrbewegung des Laserschneidkopfes 7 unterfahren. Der Umlenkspiegel 15 der Strahlführung 14 dient als Strahlführungselement zur Umlenkung des von dem CO₂-Laser 12 ausgesandten Laserstrahls 13 zu der Strahlumlenkung 19.

In Fig. 2 ist die Strahlumlenkung 19 in einer ihrer Bewegungs-Endstellungen in Richtung der x-Achse gezeigt. Auch die Brücke 6 nimmt dabei in Richtung der x-Achse eine ihrer Bewegungs-Endstellungen ein. In Richtung der y-Achse ist der Laserschneidkopf 7 in seine zu dem Maschinenlängsträger 3 hin gelegene Endstellung verfahren. In seiner Endstellung an dem gegenüberliegenden Ende der Brücke 6 ist der Laserschneidkopf 7 in Fig. 2 gestrichelt dargestellt. Würde der Laserschneidkopf 7 bei in der gezeigten Bewegungs-Endstellung verbleibender Brücke 6 in Richtung der y-Achse aus der mit ausgezogenen Linien eingezeichneten Endstellung in die mit gestrichelten Linien dargestellte Endstellung verfahren, so müsste sich zur Kompensation dieser Bewegung die Strahlumlenkung 19 aus der Bewegungs-Endstellung gemäß Fig. 2 um die Hälfte der Verfahrweglänge des Laserschneidkopfs 7 in Richtung der x-Achse zu der Brücke 6 hin bewegen. Entsprechend ist in dem Betriebszustand gemäß Fig. 2 in Richtung der x-Achse der Abstand zwischen der Strahlumlenkung 19 und der Brücke 6 gewählt. Dieser Abstand und die Abmessung der Strahlumlenkung 19 in Richtung der x-Achse geben die Länge des Überstandes des Maschinenlängsträgers 3 gegenüber der in der gezeigten Bewegungs-Endstellung befindlichen Brücke 6 vor.

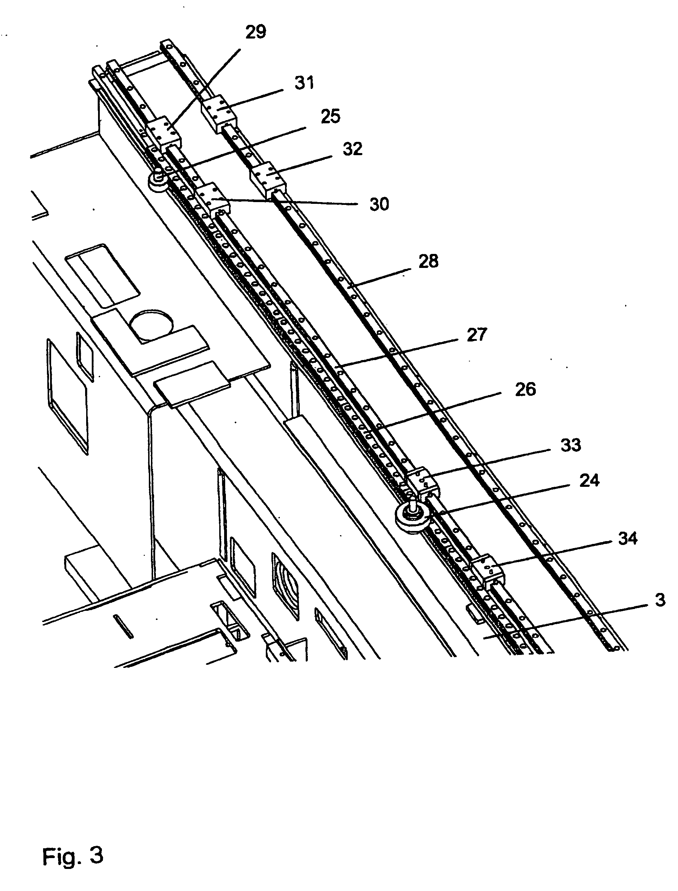

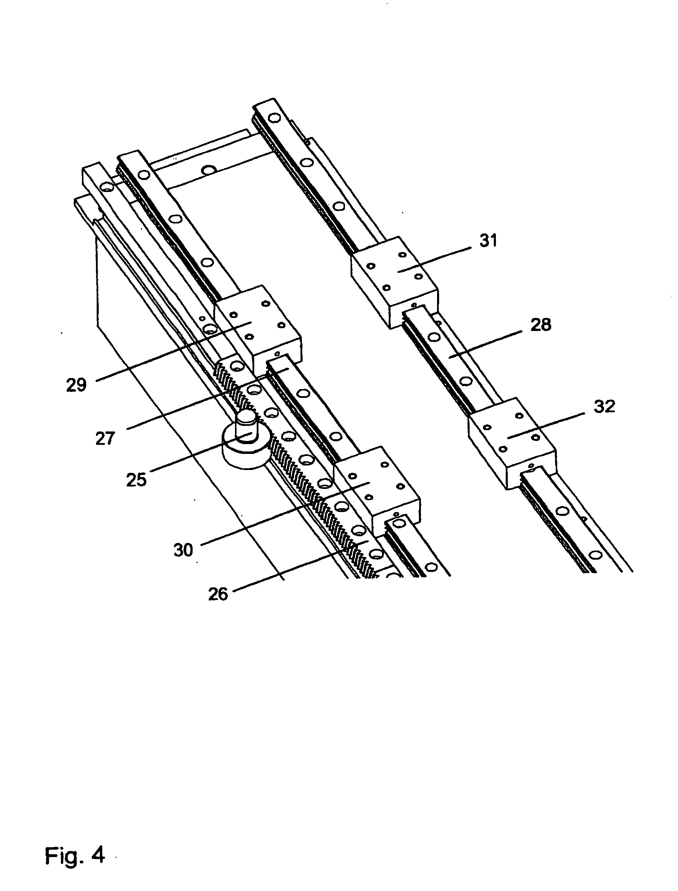

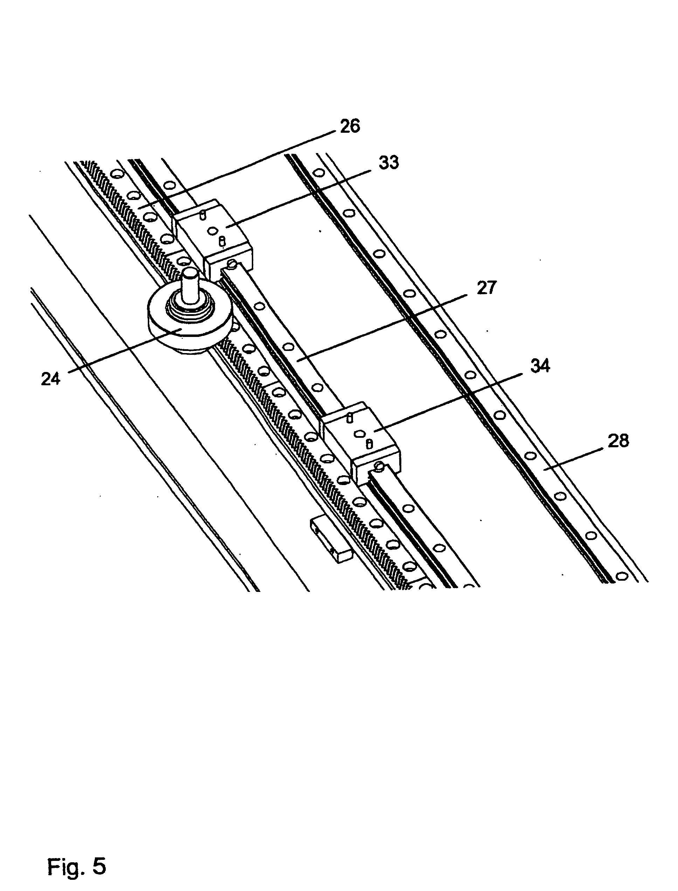

In den Fign. 3 bis 5 zu erkennen sind ein Antriebsritzel 24 des Antriebes 8 für die Brücke 6 sowie ein Antriebsritzel 25 des Antriebes 21 für die Strahlumlenkung 19. Die Antriebsritzel 24, 25 werden über die elektrischen Antriebsmotoren 10, 22 angetrieben und kämmen mit einer gemeinsamen Zahnstange 26, die mit .dem Maschinenlängsträger 3 verschraubt ist und dort in Richtung der x-Achse verläuft.

Parallel zu der Zahnstange 26 erstrecken sich an dem Maschinenlängsträger 3 Führungsschienen 27, 28, die gleichfalls mit dem Maschinenlängsträger 3 verschraubt sind. Die Führungsschiene 27 dient dabei als gemeinsame Führungsschiene für die Brücke 6 und die Strahlumlenkung 19, die Führungsschiene 28 zur alleinigen Führung der Strahlumlenkung 19. Die Lagerung der Strahlumlenkung 19 an den Führungsschienen 27, 28 erfolgt über Führungswagen 29, 30, 31, 32, die Führung der Brücke 6 an der Führungsschiene 27 mittels Führungswagen 33, 34. Zur Steuerung des Antriebes 21 für die Strahlumlenkung 19 der Strahlposaune 20 ist ebenso wie zur Steuerung der Antriebe 8, 9 für die Brücke 6 und die Steuerung des Antriebes für den Laserschneidkopf 7 eine nicht gezeigte CNC-Steuerung vorgesehen. Mittels dieser lässt sich der Antrieb 21 der Strahlumlenkung 19 abgestimmt auf die Steuerung der Antriebe 8, 9 der Brücke 6 sowie abgestimmt auf den Antrieb des Laserschneidkopfs 7 steuern.

## Patentansprüche

1. Werkzeugmaschine zum Bearbeiten von Werkstücken mittels eines Laserstrahls (13), umfassend eine Laserstrahlquelle (12), einen Laserbearbeitungskopf (7), eine Strahlführung (14) zur Führung des Laserstrahls (13) von der Laserstrahlquelle (12) zu dem Laserbearbeitungskopf (7) sowie eine erste Führungsstruktur (3, 4) und eine zweite Führungsstruktur (6),
- wobei der Laserbearbeitungskopf (7) bei der Werkstückbearbeitung relativ zu der Laserstrahlquelle (12) bewegbar ist, indem die zweite Führungsstruktur (6) mit dem Laserbearbeitungskopf (7) an der ersten Führungsstruktur (3, 4) in Richtung einer ersten Bewegungsachse (x-Achse) bewegbar geführt ist und indem die zweite Führungsstruktur (6) ihrerseits den Laserbearbeitungskopf (7) in Richtung einer zweiten Bewegungsachse (y-Achse) bewegbar führt, die unter einem Winkel zu der ersten Bewegungsachse (x-Achse) verläuft,
- wobei die Strahlführung (14) eine Strahlposaune (20) mit einer Strahlumlenkung (19) aufweist, wobei der Laserstrahlquelle (12), gegenüber der Strahlumlenkung (19) der Strahlposaune (20) erhöht angeordnet ist, der Strahlumlenkung (19) bei der Bewegung des Laserbearbeitungskopfes (7) relativ zu der Laserstrahlquelle (12) auf diese Bewegung abgestimmt bewegbar an der ersten Führungsstruktur (3, 4) in Richtung der ersten Bewegungsachse (x-Achse) geführt ist und wobei die Strahlführung (14) außerdem wenigstens ein Strahlführungselement (15) aufweist, das in dem Weg des Laserstrahls (13) zwischen der Laserstrahlquelle (12) und der Strahlumlenkung (19) der Strahlposaune (20) vorgesehen und mittels dessen der von der Laserstrahlquelle (12) ausgesandte Laserstrahl (13) zu der Strahlumlenkung (19) der Strahlposaune (20) umlenkbar ist und
- wobei die zweite Führungsstruktur (6) in Richtung der ersten Bewegungsachse (x-Achse) zu der Laserstrahlquelle (12) hin in eine Bewegungs-Endstellung bewegbar ist und die Strahlumlenkung (19) der Strahlposaune (20) bei in der genannten Bewegungs-Endstellung befindlicher zweiter Führungsstruktur (6) unter die Laserstrahlquelle (12) bewegt ist,
**dadurch gekennzeichnet, dass**
die Strahlumlenkung (19) der Strahlposaune (20) bei der Bewegung des Laserbearbeitungskopfes (7) relativ zu der Laserstrahlquelle (12) in Richtung der ersten Bewegungsachse (x-Achse) gesehen stets an der zu der Laserstrahlquelle (12) hin liegenden Seite der zweiten Führungsstruktur (6) angeordnet ist.

2. Werkzeugmaschine nach Ansprüch 1, dadurch gekennzeichne t, dass die erste Führungsstruktur (3, 4) gegenüber der ihre zu der Laserstrahlquelle (12) hin gelegene Bewegungs-Endstellung einnehmenden zweiten Führungsstruktur (6) an der der Strahlumlenkung (19) der Strahlposaune (20) zugewandten Seite der zweiten Führungsstruktur (6) einen Überstand aufweist, dessen Länge in Richtung der ersten Bewegungsachse (x-Achse) im Wesentlichen der betreffenden Abmessung der Strahlumlenkung (19) der Strahlposaune (20) zuzüglich der Länge desjenigen Weges entspricht, über welchen die Strahlumlenkung (19) der Strahlposaune (20) bei Bewegung des Laserbearbeitungskopfes (7) in Richtung der zweiten Bewegungsachse (y-Achse) maximal bewegbar ist.

3. Werkzeugmaschine nach einem der vorhergehenden Ansprüche, **dadurch gekennzeichnet, dass** die Strahlumlenkung (19) der Strahlposaune (20) und die zweite Führungsstruktur (6) mittels jeweils wenigstens eines Antriebes (8, 9, 21) mit wenigstens einem mit der Strahlumlenkung (19) der Strahlposaune (20) oder der zweiten Führungsstruktur (6) bewegungsverbundenen Antriebsrad in Richtung der ersten Bewegungsachse (x-Achse) bewegbar sind, wobei wenigstens ein der Strahlumlenkung (19) der Strahlposaune (20) und wenigstens ein der zweiten Führungsstruktur (6) zugeordnetes Antriebsrad mit wenigstens einer gemeinsamen Antriebsstange zusammenwirken, die in Richtung der ersten Bewegungsachse (x-Achse) der Strahlumlenkung (19) der Strahlposaune (20) und der zweiten Führungsstruktur (6) verläuft und mit der ersten Führungsstruktur (3,4) der Werkzeugmaschine verbunden ist.

4. Werkzeugmaschine nach Anspruch 3, **dadurch gekennzeichnet, dass** wenigstens eine gemeinsame Antriebsstange als ZahnStange (26) und wenigstens ein der Strahlumlenkung (19) der Strahlposaune (20) sowie wenigstens ein der zweiten Führungsstrucktur (6) zugeordnetes Antriebsrad als mit der Zahnstange (26) kämmendes Antriebsritzel (24, 25) ausgebildet sind.

5. Werkzeugmaschine nach Anspruch 3 oder 4, **dadurch gekennzeichnet, dass** an der ersten Führungsstruktur (3, 4) der Werkzeugmaschine zusätzlich zu der wenigstens einen gemeinsamen Antriebsstange zumindest eine gemeinsame Führungsschiene (27) für die Strahlumlenkung (19) der Strahlposaune (20) und die zweite Führungsstruktur (6) vorgesehen ist, die in Richtung der ersten Bewegungsachse (x-Achse) der Strahlumlenkung (19) der Strahlposaune (20) und der zweiten Führungsstruktur (6) verläuft und welche die Strahlumlenkung (19) der Strahlposaune (20) und die zweite Führungsstruktur (6) in dieser Richtung führt.

## Claims

1. Machine tool for processing workpieces by means of a laser beam (13), comprising a laser beam source (12), a laser processing head (7), a beam guide (14) for guiding the laser beam (13) from the laser beam source (12) to the laser processing head (7), and a first guide structure (3, 4) and a second guide structure (6),
- the laser processing head (7) being able to be moved relative to the laser beam source (12) during the workpiece processing operation by the second guide structure (6) being moveably guided with the laser processing head (7) on the first guide structure (3, 4) in the direction of a first axis of movement (x axis) and by the second guide structure (6) itself moveably guiding the laser processing head (7) in the direction of a second axis of movement (y axis) which extends at an angle relative to the first axis of movement (x axis),
- the beam guide (14) having a beam trombone (20) which has a beam redirecting arrangement (19), the laser beam source (12) being arranged in a raised position relative to the beam redirecting arrangement (19) of the beam trombone (20), the beam redirecting arrangement (19) being guided on the first guide structure (3, 4) in the direction of the first axis of movement (x axis) so as to be able to be moved during the movement of the laser processing head (7) relative to the laser beam source (12) in accordance with this movement, and the beam guide (14) further having at least one beam guiding element (15) which is provided in the path of the laser beam (13) between the laser beam source (12) and the beam redirecting arrangement (19) of the beam trombone (20) and by means of which the laser beam (13) emitted from the laser beam source (12) can be redirected to the beam redirecting arrangement (19) of the beam trombone (20) and
- the second guide structure (6) being able to be moved into a movement end-position in the direction of the first axis of movement (x axis) towards the laser beam source (12), and the beam redirecting arrangement (19) of the beam trombone (20) being moved below the laser beam source (12) when the second guide structure (6) is located in that movement end-position,
**characterised in that**,
during the movement of the laser processing head (7) relative to the laser beam source (12), the beam redirecting arrangement (19) of the beam trombone (20), when viewed in the direction of the first axis of movement (x axis), is always arranged at the side of the second guide structure (6) that is directed towards the laser beam source (12).

2. Machine tool according to claim 1, **characterised in that** the first guide structure (3, 4) has, relative to the second guide structure (6), which takes up the movement end-position thereof directed towards the laser beam source (12), at the side of the second guide structure (6) that faces the beam redirecting arrangement (19) of the beam trombone (20), a projection whose length, in the direction of the first axis of movement (x axis), substantially corresponds to the relevant dimension of the beam redirecting arrangement (19) of the beam trombone (20) plus the length of the path over which the beam redirecting arrangement (19) of the beam trombone (20) can, at the maximum, be moved during the movement of the laser processing head (7) in the direction of the second axis of movement (y axis).

3. Machine tool according to either of the preceding claims, **characterised in that** the beam redirecting arrangement (19) of the beam trombone (20) and the second guide structure (6) can be moved in the direction of the first axis of movement (x axis) by means of at least one respective drive (8, 9, 21) having at least one drive wheel which is movingly connected to the beam redirecting arrangement (19) of the beam trombone (20) or the second guide structure (6), at least one drive wheel associated with the beam redirecting arrangement (19) of the beam trombone (20) and at least one drive wheel associated with the second guide structure (6) co-operating with at least one common drive rod, which extends in the direction of the first axis of movement (x axis) of the beam redirecting arrangement (19) of the beam trombone (20) and the second guide structure (6) and which is connected to the first guide structure (3, 4) of the machine tool.

4. Machine tool according to claim 3, **characterised in that** at least one common drive rod is in the form of a toothed rack (26) and at least one drive wheel associated with the beam redirecting arrangement (19) of the beam trombone (20) and at least one drive wheel associated with the second guide structure (6) are in the form of a drive pinion (24, 25) which meshes with the toothed rack (26).

5. Machine tool according to claim 3 or 4, **characterised in that** at least one common guide rail (27) for the beam redirecting arrangement (19) of the beam trombone (20) and the second guide structure (6) is provided on the first guide structure (3, 4) of the machine tool, in addition to the at least one common drive rod, which guide rail extends in the direction of the first axis of movement (x axis) of the beam redirecting arrangement (19) of the beam trombone (20) and the second guide structure (6) and guides the beam redirecting arrangement (19) of the beam trombone (20) and the second guide structure (6) in this direction.

## Revendications

1. Machine-outil pour l'usinage de pièces au moyen d'un faisceau laser (13), comprenant une source (12) de faisceau laser, une tête (7) d'usinage laser, un guide de faisceau (14) pour guider le faisceau laser (13) de la source (12) de faisceau laser à la tête (7) d'usinage laser, ainsi qu'une première structure de guidage (3, 4) et une deuxième structure de guidage (6),
- la tête (7) d'usinage laser pouvant être déplacée par rapport à la source (12) de faisceau laser lors de l'usinage de la pièce, par le fait que la deuxième structure de guidage (6) pourvue de la tête (7) d'usinage laser est guidée en déplacement sur la première structure de guidage (3, 4) dans la direction d'un premier axe de déplacement (axe x), et par le fait que la deuxième structure de guidage (6) guide elle-même en déplacement la tête (7) d'usinage laser dans la direction d'un deuxième axe de déplacement (axe y) qui s'étend sous un angle par rapport au premier axe de déplacement (axe x),
- le guide de faisceau (14) présentant un trombone de guidage (20) avec un renvoi de faisceau (19), la source (12) de faisceau laser étant disposée surélevée par rapport au renvoi de faisceau (19) du trombone de guidage (20), le renvoi de faisceau (19), lors du déplacement de la tête (7) d'usinage laser par rapport à la source (12) de faisceau laser, étant guidé en déplacement d'une manière adaptée à ce déplacement sur la première structure de guidage (3, 4), dans la direction du premier axe de déplacement (axe x), et le guide de faisceau (14) présentant en outre au moins un élément (15) de guidage de faisceau qui est prévu dans le parcours du faisceau laser (13) entre la source (12) de faisceau laser et le renvoi de faisceau (19) du trombone de guidage (20), et au moyen duquel le faisceau laser (13) émis par la source (12) de faisceau laser peut être renvoyé vers le renvoi de faisceau (19) du trombone de guidage (20), et
- la deuxième structure de guidage (6) pouvant être déplacée, dans la direction du premier axe de déplacement (axe x), vers la source (12) de faisceau laser dans une position finale de déplacement, et le renvoi de faisceau (19) du trombone de guidage (20) étant déplacé sous la source (12) de faisceau laser lorsque la deuxième structure de guidage (6) se trouve dans cette position finale de déplacement,
**caractérisée en ce que** le renvoi de faisceau (19) du trombone de guidage (20) est, lors du déplacement de la tête (7) d'usinage laser par rapport à la source (12) de faisceau laser, considéré dans la direction du premier axe de déplacement (axe x), toujours disposé sur le côté de la deuxième structure de guidage (6) qui est tourné vers la source (12) de faisceau laser.

2. Machine-outil selon la revendication 1, **caractérisée en ce que** la première structure de guidage (3, 4) présente, par rapport à la deuxième structure de guidage (6) prenant sa position finale de déplacement située vers la source (12) de faisceau laser, sur le côté de la deuxième structure de guidage (6) qui est tourné vers le renvoi de faisceau (19) du trombone de guidage (20), un porte-à-faux dont la longueur dans la direction du premier axe de déplacement (axe x) correspond sensiblement à la dimension correspondante du renvoi de faisceau (19) du trombone de guidage (20), augmentée de la longueur de la course maximale dont le renvoi de faisceau (19) du trombone de guidage (20) peut être déplacé lors du déplacement de la tête (7) d'usinage laser dans la direction du deuxième axe de déplacement (axe y).

3. Machine-outil selon une des revendications précédentes, **caractérisée en ce que** le renvoi de faisceau (19) du trombone de guidage (20) et la deuxième structure de guidage (6) peuvent être déplacés dans la direction du premier axe de déplacement (axe x) au moyen d'au moins un entraînement respectif (8, 9, 21) comportant au moins une roue d'entraînement liée en déplacement au renvoi de faisceau (19) du trombone de guidage (20) ou à la deuxième structure de guidage (6), au moins une roue d'entraînement associée au renvoi de faisceau (19) du trombone de guidage (20) et au moins une roue d'entraînement associée à la deuxième structure de guidage (6) coopérant avec au moins une tringle d'entraînement commune, qui s'étend dans la direction du premier axe de déplacement (axe x) du renvoi de faisceau (19) du trombone de guidage (20) et de la deuxième structure de guidage (6), et qui est assemblée à la première structure de guidage (3, 4) de la machine-outil.

4. Machine-outil selon la revendication 3, **caractérisée en ce qu'**au moins une tringle d'entraînement commune est réalisée sous forme de crémaillère (26) et au moins une roue d'entraînement associée au renvoi de faisceau (19) du trombone de guidage (20) ainsi qu'au moins une roue d'entraînement associée à la deuxième structure de guidage (6) sont réalisées sous forme de pignons d'entraînement (24, 25) engrenant avec la crémaillère (26).

5. Machine-outil selon la revendication 3 ou 4, **caractérisée en ce qu'**il est prévu sur la première structure de guidage (3, 4) de la machine-outil, en plus de la tringle d'entraînement commune au moins unique, au moins un rail de guidage commun (27) pour le renvoi de faisceau (19) du trombone de guidage (20) et pour la deuxième structure de guidage (6), rail qui s'étend dans la direction du premier axe de déplacement (axe x) du renvoi de faisceau (19) du trombone de guidage (20) et de la deuxième structure de guidage (6), et qui guide dans cette direction le renvoi de faisceau (19) du trombone de guidage (20) et la deuxième structure de guidage (6).
